# EUROPEAN PATENT APPLICATION

(11) **EP 3 254 547 A1**
(43) Date of publication of application: **13.12.2017**
(21) Application number: 17175247.0
(22) Date of filing: 09.06.2017
(51) Int. Cl.: A01B 69/00, G05D 1/00

(54) **SYSTEM AND METHOD FOR VEHICLE STEERING CALIBRATION**

(30) Priority: 10.06.2016 US 201615179292
(71) Applicant: CNH Industrial Belgium NV, 8210 Zedelgem (BE); Autonomous Solutions, Inc., Mendon, Utah 84325 (US)
(72) Inventor: Dix, Peter J., Naperville, Illinois 60565 (US); McCarthy, Brendan, Willowbrook, Illinois 60527 (US); Ray, Brian R., Chicago, Illinois 60661 (US); Bunderson, Nathan E., Providence, Utah 84332 (US); Peterson, John A., Providence, Utah 84332 (US)
(74) Representative: CNH Industrial IP Department

(57) **Abstract**

A vehicle system (36) includes a spatial location system (38) configured to derive a geographic position of an autonomous vehicle (10). The vehicle system (36) further includes a computing device (49) communicatively coupled to the spatial location system (38), the computing device (49) comprising a processor (50). The processor (50) is configured select a calibration mode via a user input. The processor (50) is also configured to execute an automatic steering calibration based on the calibration mode to update one or more steering parameters, wherein executing the automatic steering calibration comprises driving the vehicle (10) via autoguidance to spatially follow a desired path segment.

## Description

### BACKGROUND

The invention relates generally to a steering calibration of vehicles.

Certain vehicles may operate via control systems that direct the steering of vehicles. For example, certain agricultural tractors may include automatic steering systems suitable for steering the agricultural tractors in fields having a variety of soil conditions and obstacles. Generally, the vehicle, such as the agricultural tractor, may be provided a map that may be used by the vehicle to follow certain paths and to avoid certain terrain features. Accordingly, a control system, such as an electronic control system, may be used to control and/or otherwise steer the autonomous vehicle. The agricultural tractor may thus be steered through a field. It would be beneficial to improve on steering of the vehicle. As a result of improved steering, the vehicle may improve drive times and enhance operational efficiency.

### BRIEF DESCRIPTION

In one embodiment a vehicle system includes a spatial location system configured to derive a geographic position of an autonomous vehicle. The vehicle system further includes a computing device communicatively coupled to the spatial location system, the computing device comprising a processor. The processor is configured select a calibration mode via a user input. The processor is also configured to execute an automatic steering calibration based on the calibration mode to update one or more steering parameters, wherein executing the automatic steering calibration comprises driving the vehicle via autoguidance to spatially follow a desired path segment.

In another embodiment, a method includes spatially locating an autonomous vehicle location via a spatial location system. The method also includes selecting a calibration mode via a processor receiving user input. The method further includes executing, via the processor, an automatic steering calibration based on the calibration mode to update one or more steering parameters, wherein executing the automatic steering calibration comprises driving the vehicle via autoguidance to spatially follow a desired path segment.

In a further embodiment, a non-transitory, computer readable medium comprises instructions that when executed by a processor cause the processor to spatially locate a vehicle location via a spatial location system. The instructions further cause the processor to select a calibration mode via a processor. The instructions also cause the processor to execute, via the processor, a steering calibration based on the calibration mode to update one or more steering parameters, wherein executing the steering calibration comprises driving the vehicle via autoguidance to spatially follow a desired path segment.

### DRAWINGS

These and other features, aspects, and advantages of the present invention will become better understood when the following detailed description is read with reference to the accompanying drawings in which like characters represent like parts throughout the drawings, wherein:
FIG. 1 is a schematic diagram of an embodiment of an vehicle operating within an agricultural field;
FIG. 2 is a block diagram of an embodiment of computing systems for the agricultural vehicle of FIG. 1, and for a base station;
FIG. 3 is a flowchart of an embodiment of a process suitable for automatically calibrating a steering of the vehicle of FIG. 1; and
FIG. 4 is a flowchart of an embodiment of a process suitable for selecting various modes and calibrating a steering of the vehicle of FIG. 1.

### DETAILED DESCRIPTION

Certain agricultural and other operations (mining, construction, and the like) may use an unmanned and/or manned vehicle such as a tractor or other vehicle. For agricultural operations, the vehicle may tow or include an agricultural implement such as a planter, seeder, fertilizer, and so on. In operations, the vehicle uses a map suitable for defining field boundaries, driving paths, and the like. The vehicle may operate in unmanned modes based on map data, and/or a human may operate the vehicle based on the map data. The vehicles described herein may include automatic steering system calibration, in addition to autoguidance (e.g., automatic steering system). In autoguidance, a vehicle may use GPS to follow a desired path automatically without human intervention. However, in certain embodiments, a human may work on the vehicle's cab to apply throttle inputs (e.g., speed control) and breaking. The human may also take over steering, if desired. A manual calibration process for a steering system may be tedious and not as accurate. An improved automatic and/or semi-automatic system and method for steering calibration is described herein, that may include multiple modes of operation with various levels of steering calibration. For example, a first calibration mode may calibrate all or substantially all steering system parameters of the vehicle. A second calibration mode may calibrate any subset of full calibration and may target calculating one or more steering system parameters. The first and second calibration modes may include multiple modes (e.g., submodes) each.

For example, in certain submodes of calibration, a control system executes a full or subset calibration derivation while automatically steering the vehicle through a series of patterns. In other submodes of calibration the controller executes a full or subset calibration while the operator drives the vehicle manually. In yet another submode of calibration the controller executes full calibration continuously, to periodically update the steering model parameters, for example to adapt the model parameter values as they change over time. Other modes or submodes may only update a steering offset parameter while leaving all the remaining parameters unchanged. Still other modes or submodes may verify whether or not the current calibration parameters are valid and within an acceptable tolerance, and if they are not, full calibration may then be performed. By applying certain steering calibration processes described herein, a more accurate steering may be provided, suitable for more efficient driving and turning.

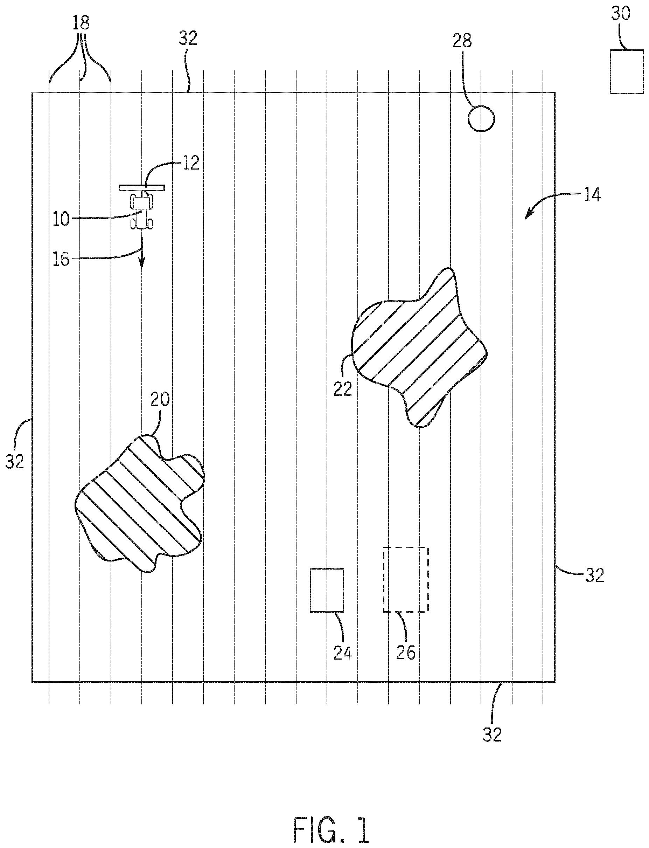

Turning now to FIG. 1, the figure is a schematic diagram of an embodiment of a vehicle 10 (autonomous and/or manned tractor) towing an agricultural implement 12 within an agricultural field 14. The vehicle may additionally include automatic steering (e.g., autoguidance), where a human operator may ride in the cab operating throttle and brakes while the vehicle 10 steers automatically. While in the depicted embodiment, the vehicle 10 is depicted as an agricultural tractor, in other embodiments, the vehicle 10 may be a construction vehicle, a mining vehicle, a passenger vehicle, or the like. The tractor 10 or other prime mover is configured to tow the agricultural implement 12 throughout the field 14 along a direction of travel 16. In certain embodiments, the tractor 10 is steered (e.g., via an operator or an automated system) to traverse the field along substantially parallel rows 18. However, it should be appreciated that the tractor 10 may be steered to traverse the field along other routes (e.g., along a spiral paths, curved paths, obstacle avoidance paths, and so on) in alternative embodiments. As will be appreciated, the agricultural implement 12 may be any suitable implement for performing agricultural operations throughout the field 14. For example, in certain embodiments, the agricultural implement 12 may be a tillage tool, a fertilizer application tool, a seeding or planting tool, or a harvesting tool, among others. While the agricultural implement 12 is towed by the tractor 10 in the illustrated embodiment, it should be appreciated that in alternative embodiments, the agricultural implement may be integrated within the tractor 10. As described earlier, it should be noted that the techniques describe herein may be used for operations other than agricultural operations. For example, mining operations, construction operations, automotive operations, and so on.

As the tractor 10 and the agricultural implement 12 traverse the field, the tractor 10 and the agricultural implement 12 may encounter various field and/or soil conditions, as well as certain structures. Such field and/or soil conditions and structures may be defined as features for purposes of the description herein. For example, the tractor 10 and the agricultural implement 12 may encounter features such as a pond 20, a tree stand 22, a building or other standing structure 24, fencing 26, and miscellaneous features 28 and so on. The miscellaneous features 28 may include water pumps, above ground fixed or movable equipment (e.g. irrigation equipment, planting equipment), and so on. In certain embodiments, the tractor 10 is configured to operate autonomously (e.g., without an operator present in the cab of the off-road vehicle). Accordingly, a steering system may steer the tractor 10 and agricultural implement 12 throughout the field without direct control by an operator, for example via a map.

The map be transmitted and/or included in a base station 30. The base station 30 may be communicatively coupled to the tractor 10 to provide for updated maps suitable for operating on the field 14. The map may include a field boundary 32, as well as the various features in the field, such as the pond 20, the tree stand 22, the building or other standing structure 24, the fencing 26, wet areas of the field 14 to be avoided, soft areas of the field to be avoided, the miscellaneous features 28, and so on. As the tractor 10 operates, the steering may go out of adjustment. Accordingly, a steering calibration system may be provided, either included in a vehicle control system, in an external system such as the base station 30, or in a combination thereof. The steering calibration system may apply certain steering calibration processes (e.g., algorithms) described in more detail below to adjust or otherwise correct the steering to provide for improved driving and control of the tractor 10, as discussed in detail below,

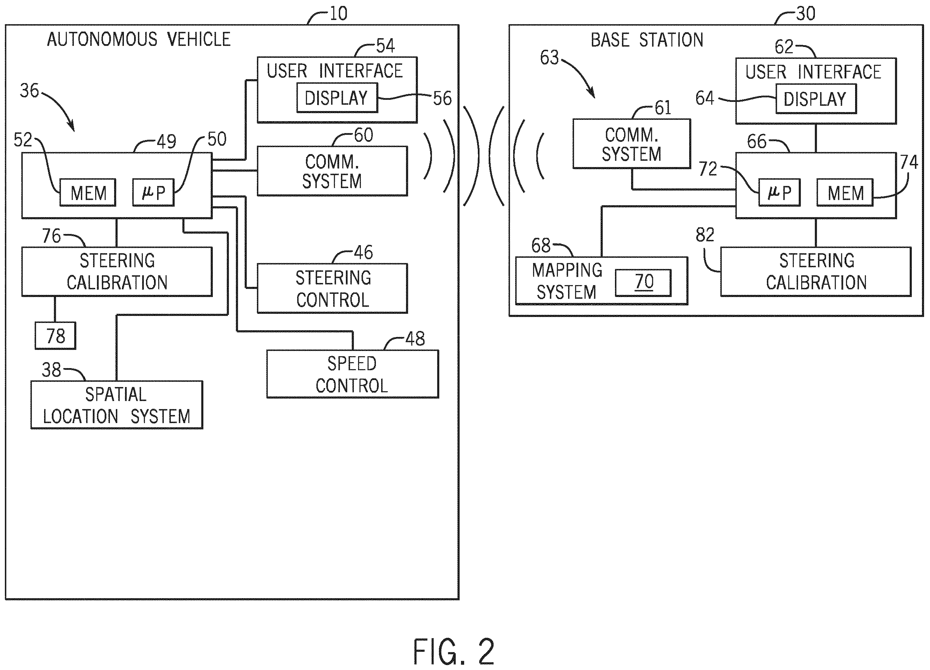

It may be useful to illustrate a system that may be used to both autonomously drive the agricultural vehicle 10 as well as to calibrate steering for the agricultural vehicle 10. Accordingly, and turning now to FIG. 2, the figure is a schematic diagram of an embodiment of a control system 36 that may be employed within the agricultural vehicle 10 of FIG. 1. In the illustrated embodiment, a control system 36 includes a spatial location system 38, which is mounted to the agricultural vehicle 10 and configured to determine a position, and in certain embodiments a velocity, of the agricultural vehicle 10. As will be appreciated, the spatial location system 38 may include any suitable system configured to measure and/or determine the position of the autonomous agricultural vehicle 10, such as a global positioning system (GPS) receiver, for example, and/or GLONASS or other similar system. In certain embodiments, the spatial location system 38 may additionally or alternatively be configured to determine the position of the scouting vehicle 10 relative to a fixed point within the field 14 (e.g., via a fixed radio transceiver). Accordingly, the spatial location system 38 may be configured to determine the position of the scouting vehicle 10 relative to a fixed global coordinate system (e.g., via the GPS), a fixed local coordinate system, or a combination thereof. The spatial location system 38 may additionally use real time kinematic (RTK) techniques to enhance positioning accuracy.

In the illustrated embodiment, the control system 36 includes a steering control system 46 configured to control a direction of movement of the agricultural vehicle 10, and a speed control system 48 configured to control a speed of the agricultural vehicle 10. In addition, the control system 36 includes a controller 49, which is communicatively coupled to the spatial locating device 38, to the steering control system 46, and to the speed control system 48. The controller 49 is configured to automatically control the agricultural vehicle during certain phases of agricultural operations (e.g., without operator input, with limited operator input, etc.).

In certain embodiments, the controller 49 is an electronic controller having electrical circuitry configured to process data from the spatial locating device 38 and/or other components of the control system 36. In the illustrated embodiment, the controller 49 includes a processor, such as the illustrated microprocessor 50, and a memory device 52. The controller 49 may also include one or more storage devices and/or other suitable components. The processor 50 may be used to execute software, such as software for controlling the agricultural vehicle, software for determining vehicle orientation, software to perform steering calibration, and so forth. Moreover, the processor 50 may include multiple microprocessors, one or more "general-purpose" microprocessors, one or more special-purpose microprocessors, and/or one or more application specific integrated circuits (ASICS), or some combination thereof. For example, the processor 50 may include one or more reduced instruction set (RISC) processors.

The memory device 52 may include a volatile memory, such as random access memory (RAM), and/or a nonvolatile memory, such as read-only memory (ROM). The memory device 52 may store a variety of information and may be used for various purposes. For example, the memory device 52 may store processor-executable instructions (e.g., firmware or software) for the processor 50 to execute, such as instructions for controlling the agricultural vehicle, instructions for determining vehicle orientation, and so forth. The storage device(s) (e.g., nonvolatile storage) may include ROM, flash memory, a hard drive, or any other suitable optical, magnetic, or solid-state storage medium, or a combination thereof. The storage device(s) may store data (e.g., position data, vehicle geometry data, etc.), instructions (e.g., software or firmware for controlling the agricultural vehicle, etc.), and any other suitable data.

In certain embodiments, the steering control system 46 may include a wheel angle control system, a differential braking system, a torque vectoring system, or a combination thereof. The wheel angle control system may automatically rotate one or more wheels and/or tracks of the agricultural vehicle (e.g., via hydraulic actuators) to steer the agricultural vehicle along a desired route (e.g., along the guidance swath, along the swath acquisition path, etc.). By way of example, the wheel angle control system may rotate front wheels/tracks, rear wheels/tracks, and/or intermediate wheels/tracks of the agricultural vehicle, either individually or in groups. The differential braking system may independently vary the braking force on each lateral side of the agricultural vehicle to direct the agricultural vehicle along a path. Similarly, the torque vectoring system may differentially apply torque from an engine to wheels and/or tracks on each lateral side of the agricultural vehicle, thereby directing the agricultural vehicle along a path. In further embodiments, the steering control system may include other and/or additional systems to facilitate directing the agricultural vehicle along a path through the field.

In certain embodiments, the speed control system 48 may include an engine output control system, a transmission control system, a braking control system, or a combination thereof. The engine output control system may vary the output of the engine to control the speed of the agricultural vehicle. For example, the engine output control system may vary a throttle setting of the engine, a fuel/air mixture of the engine, a timing of the engine, other suitable engine parameters to control engine output, or a combination thereof. In addition, the transmission control system may adjust gear selection within a transmission to control the speed of the agricultural vehicle. Furthermore, the braking control system may adjust braking force, thereby controlling the speed of the agricultural vehicle. In further embodiments, the speed control system may include other and/or additional systems to facilitate adjusting the speed of the agricultural vehicle.

In certain embodiments, the control system 36 may also control operation of the agricultural implement 12 coupled to the agricultural vehicle 10. For example, the control system 36 may include an implement control system/implement controller configured to control a steering angle of the implement 12 (e.g., via an implement steering control system having a wheel angle control system and/or a differential braking system) and/or a speed of the agricultural vehicle/implement system 12 (e.g., via an implement speed control system having a braking control system). In such embodiments, the control system 36 may be communicatively coupled to the implement control system/controller on the implement 12 via a communication network, such as a controller area network (CAN bus).

In the illustrated embodiment, the control system 36 includes a user interface 54 communicatively coupled to the controller 49. The user interface 54 is configured to enable an operator (e.g., standing proximate to the agricultural vehicle) to control certain parameter associated with operation of the agricultural vehicle. For example, the user interface 54 may include a switch that enables the operator to configure the agricultural vehicle for or manual operation. In addition, the user interface 54 may include a battery cut-off switch, an engine ignition switch, a stop button, or a combination thereof, among other controls. In certain embodiments, the user interface 54 includes a display 56 configured to present information to the operator, such as a graphical representation of a guidance swath, a visual representation of certain parameter(s) associated with operation of the agricultural vehicle (e.g., fuel level, oil pressure, water temperature, etc.), a visual representation of certain parameter(s) associated with operation of an implement coupled to the agricultural vehicle (e.g., seed level, penetration depth of ground engaging tools, orientation(s)/position(s) of certain components of the implement, etc.), or a combination thereof, steering calibration information, among other information. In certain embodiments, the display 56 may include a touch screen interface that enables the operator to control certain parameters associated with operation of the agricultural vehicle and/or the implement.

In the illustrated embodiment, the control system 36 may include manual controls configured to enable an operator to control the agricultural vehicle while automatic control is disengaged (e.g., while unloading the agricultural vehicle from a trailer, during certain steering calibration modes, etc.). The manual controls may include manual steering control, manual transmission control, manual braking control, or a combination thereof, among other controls. In the illustrated embodiment, the manual controls are communicatively coupled to the controller 49. The controller 49 is configured to disengage automatic control of the agricultural vehicle upon receiving a signal indicative of manual control of the agricultural vehicle. Accordingly, if an operator controls the agricultural vehicle manually, the automatic control terminates, thereby enabling the operator to control the agricultural vehicle.

In the illustrated embodiment, the control system 36 includes a communications system 60 communicatively coupled to the controller 44. In certain embodiments, the communications system 60 is configured to establish a communication link with a corresponding communications system 61 of the base station 30, thereby facilitating communication between the base station 30 and the control system 36 of the autonomous agricultural vehicle. For example, the base station 30 may include a control system 63 having a user interface 62 having a display 64 that enables a remote operator to provide instructions to a controller 66 (e.g., instructions to initiate control of the agricultural vehicle 10, instructions to direct the agricultural vehicle along a path, instructions to command the steering control 46 and/or speed control 48, instructions to transmit mapping data, etc.).

In certain embodiments, the controller 66 of the control system 63 is an electronic controller having electrical circuitry configured to process data from a mapping system 68 having a map 70. In the illustrated embodiment, the controller 66 includes a processor, such as the illustrated microprocessor 72, and a memory device 74. The controller 66 may also include one or more storage devices and/or other suitable components. The processor 72 may be used to execute software, such as software for controlling the agricultural vehicle, software for determining vehicle orientation, software to perform steering calibration, and so forth. Moreover, the processor 72 may include multiple microprocessors, one or more "general-purpose" microprocessors, one or more special-purpose microprocessors, and/or one or more application specific integrated circuits (ASICS), or some combination thereof. For example, the processor 50 may include one or more reduced instruction set (RISC) processors.

The memory device 74 may include a volatile memory, such as random access memory (RAM), and/or a nonvolatile memory, such as read-only memory (ROM). The memory device 74 may store a variety of information and may be used for various purposes. For example, the memory device 74 may store processor-executable instructions (e.g., firmware or software) for the processor 72 to execute, such as instructions for controlling the agricultural vehicle, instructions for determining vehicle orientation, and so forth. The storage device(s) (e.g., nonvolatile storage) may include ROM, flash memory, a hard drive, or any other suitable optical, magnetic, or solid-state storage medium, or a combination thereof. The storage device(s) may store data (e.g., position data, vehicle geometry data, etc.), instructions (e.g., software or firmware for controlling the agricultural vehicle, mapping software or firmware, etc.), and any other suitable data.

The communication systems 60, 61 may operate at any suitable frequency range within the electromagnetic spectrum. For example, in certain embodiments, the communication systems 60, 61 may broadcast and receive radio waves within a frequency range of about 1 GHz to about 10 GHz. In addition, the communication systems 60, 61 may utilize any suitable communication protocol, such as a standard protocol (e.g., Wi-Fi, Bluetooth, etc.) or a proprietary protocol.

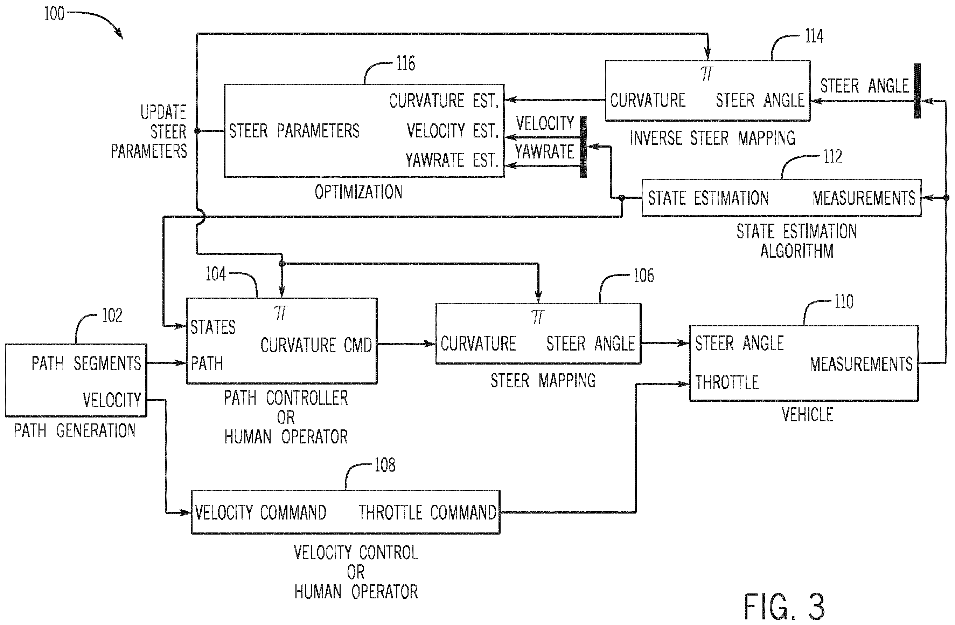

A steering calibration system 76 is provided in the control system 36, suitable for adjusting one or more steering tables 78, for example, which may be used by the steering control system 46 to steer the vehicle 10. The steering tables 78 may include polynomial coefficients or other coefficients describing certain curves, and such coefficients may be adjusted by the steering calibration system 76 using a process described in more detail below with respect to FIG. 3. The automatic steering calibration system 76 may include multiple modes of operation with various levels of steering calibration. For example, a first calibration mode may calibrate all or substantially all steering system parameters of the vehicle 10. A second calibration mode may calibrate any subset of full calibration and may target calculating one or more steering system parameters. The first and second calibration modes may include multiple modes (e.g., submodes) each. It is to be understood that the tables 80 may be stored in the vehicle 10 and/or in the base station 30. For example, the base station 30 may include, in some embodiments, its own steering calibration system 82.

In certain submodes of calibration, the steering calibration system 76 and/or 82 may execute a full or subset calibration derivation while automatically steering the vehicle through a series of patterns. In other submodes of calibration, the steering calibration system 76 and/or 82 may execute a full or subset calibration while the operator drives the vehicle manually. In yet another submode of calibration the steering calibration system 76 and/or 82 may execute full calibration continuously during driving, to periodically update the steering model parameters, for example to adapt the model parameter values as they change over time. In other modes or submodes, the steering calibration system 76 and/or 82 may only update a steering offset parameter while leaving all the remaining parameters unchanged. In still other modes or submodes, the steering calibration system 76 and/or 82 may verify whether or not the current calibration parameters are valid and within an acceptable tolerance, and if they are not, a full calibration may then be performed. Accordingly, the vehicle 10 may be more precisely steered, resulting in more optimal fuel use and increased crop yields.

FIG. 3 illustrates a flowchart of an embodiment of a process 100 suitable for automatically calibrating a steering of the vehicle 10. The process 100 may be implemented as computer instructions or code executable via the processors 50, 72 and stored in the memories 52, 74. In the depicted embodiment, the process 100 may generate (block 102) one or more path segments, each path segment having a velocity. A path segment may include geometric curve(s) or other shape that the vehicle 10 should follow during steering calibration at the desired velocity. In certain embodiments, the path segment generation (block 102) may be executed via an external system (e.g., external to the vehicle 10), such as an external computing system (e.g., workstation, personal computer, laptop, notebook, tablet, base station 30, and so on). In other embodiments, the path segment generation (block 102) may be executed via the controller 49.

The process 100 may then generate (block 104) a curvature command suitable for commanding the vehicle 10 to follow a desired curvature, for example, a command to turn a steering wheel. To generate (block 104) the curvature command, the process 100 may use the path segment(s) generated via block 102 and a vehicle state. The vehicle state may include a current vehicle velocity and a current vehicle yaw rate. In one embodiment, the curvature command (block 104) is generated via computing system (e.g., controllers 49 and/or 66). In other embodiments, a human driver issues the curvature command (block104). The curvature command block 104 may incorporate certain steering coefficients, such as coefficients A, B, C, D for when a third order polynomial is used. The third order polynomial may take the form y = A + Bx + Cx2 +Dx3 where y is the steer angle. Thus, given A, B, C, D and a value for x, the steer angle may be found. In one embodiment, x is representative of a Cartesian axis, thus, the third order polynomial equation is representative of a curvature. The curvature command may then get translated (block 106) into a desired steer angle via steer mapping. Block 106 may use the equation form y = A + Bx + Cx2 +Dx3 where y is the steer angle to derive the desired steer angle. It is to be understood that while a third order equation is described, other embodiments may use a fourth, fifth, sixth or higher order polynomial.

As mentioned earlier, each path segment may include a desired velocity to follow while navigating the path segment. A velocity command based on the velocity may be translated (block 108) into a throttle command suitable for moving the vehicle's 10 throttle to a position that will result in the desired velocity. Given the steer angle and throttle position, the vehicle 10 may then change position, orientation, and/or otherwise move. Measurements may be taken (block 110) as the vehicle 10 changes position, orientation, and/or otherwise moves. The measurements may include yaw rate, velocity, new vehicle position, acceleration, current steer angle, and/or rotational rate.

In the depicted embodiment, the measurements may be converted (block 112) into estimate states. That is, given the recorded measurements, the process 100 may derive (block 112) estimated velocity and yaw rate for the vehicle 10. For example, a physical model of the vehicle 10 may be executed by the processors 50 and/or 72 using the measurements as inputs to derive (block 112) the estimated velocity and yaw rate for the vehicle 10. The current steer angel may be transformed (block 114) into an estimate curvature or geometric curve.

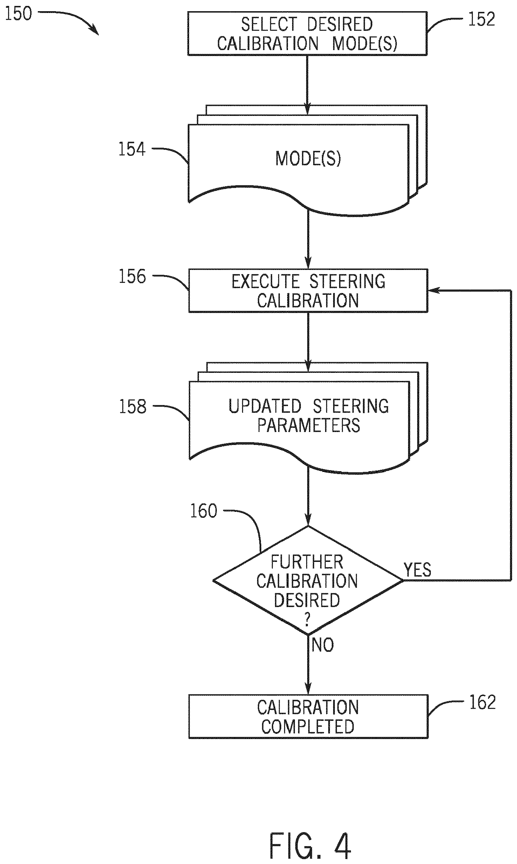

A comparison between estimated curvature, velocity, and yaw rate, and the desired path segment(s) curvature and velocity (provided by block 102) may be made (block 116). Deviations between the estimated curvature, velocity, and yaw rate, and the desired path segment(s) curvature and velocity (provided by block 102) may then be used to update (block 116) the seer parameters A, B, C, and/or D. The updated parameters A, B, C, D may then be stored and provided to blocks 104, 106, 114. The process 100 may, in certain modes, be iterative and run continuously. In other modes, the process 100 may be executed when desired, as described in more detail below with respect to FIG. 4.

FIG. 4 is a flow chart of an embodiment of a process 150 suitable for providing steering calibration for the vehicle 10. In the depicted embodiment, the process 150 may first select (block 152) one or more steering calibration modes 154. As mentioned earlier, a number of modes 154 may be provided. For example, a first calibration mode may calibrate all or substantially all steering system parameters of the vehicle. A second calibration mode may calibrate any subset of full calibration and may target calculating one or more steering system parameters. The first and second calibration modes may include multiple modes (e.g., submodes) each.

For example, in certain submodes of calibration, a control system executes a full or subset calibration derivation while automatically steering the vehicle through a series of patterns. In other submodes of calibration the controller executes a full or subset calibration while the operator drives the vehicle manually. In yet another submode of calibration the controller executes full calibration continuously during driving, to periodically update the steering model parameters, for example to adapt the model parameter values as they change over time. Other modes or submodes may only update a steering offset parameter while leaving all the remaining parameters unchanged. Still other modes or submodes may verify whether or not the current calibration parameters are valid and within an acceptable tolerance, and if they are not, full calibration may then be performed.

Once the modes 154 are selected, the process 150 may then execute (block 156) steering calibration. In one embodiment, the steering calibration process executed is the process 100 described above with respect to FIG. 3. Accordingly, one or more steering coefficients (e.g., A, B, C, D) may be updated as described above, resulting in improved steering and thus more accurate driving and crop yield. The process 150 may then determine (decision 160) if further steering calibration is desired. For example, certain of the modes 154 may desire continuous calibration, and thus, the process 150 may iterate to block 156. Other modes may verify whether or not the current calibration parameters are valid and within an acceptable tolerance. If the current calibration parameters (e.g., A, B, C, D) are not valid or within an acceptable tolerance, the process 150 may then iterate to block 156. In this manner, a more improved steering calibration is provided.

## Claims

1. A vehicle system (36), comprising:
a spatial location system (38) configured to derive a geographic position of a vehicle (10); and
a computing device (49) communicatively coupled to the spatial location system (38), the computing device (49) comprising a processor (50) configured to:
select, via a user input, a calibration mode;
execute an automatic steering calibration based on the calibration mode to update one or more steering parameters, wherein executing the automatic steering calibration comprises driving the vehicle (10) via autoguidance to spatially follow a desired path segment.

2. The vehicle system (36) of claim 1, wherein the one or more steering parameters comprise third order polynomial parameters.

3. The vehicle system (36) of claim 1, wherein the processor (50) is configured to:
generate a curvature command based on the path segment;
generate a steer angle based on the curvature command;
measure a measured yaw rate, a measured velocity, and a measured steer angle based on the vehicle (10) being driven by a human or being driven in an unmanned mode; and
update the one or more steering parameters based on the measured yaw rate, the measured velocity, and the measured steer angle.

4. The vehicle system (36) of claim 4, wherein the processor (50) is configured to update the one or more steering parameters based on the measured yaw rate, the measured velocity, and the measured steer angle by:
estimating an estimated curvature by inverse mapping the measured steer angle;
estimating an estimated velocity;
estimating an estimated yaw rate; and
updating the one or more steering parameters based on comparing the estimated curvature, estimated velocity, and estimated yaw rate to the measured yaw rate, the measured velocity, and a desired curvature of the desired path segment.

5. The vehicle system (36) of claim 4, wherein updating the one or more steering parameters based on comparing the estimated curvature, estimated velocity, and estimated yaw rate to the measured yaw rate, the measured velocity, and a desired curvature of the desired path segment comprises determining a deviation between the estimated curvature, estimated velocity, and estimated yaw rate to the measured yaw rate, the measured velocity, and the desired curvature and updating the one or more steering parameters so that the deviation is approximately zero.

6. The vehicle system (36) of claim 1, wherein the processor (50) is configured to feedback the one or more updated parameters to generate a second curvature command.

7. The vehicle system (36) of claim 1, comprising a communications system configured to communicatively couple the computing device (49) to an external computing device (49) and a vehicle control system disposed in the vehicle (10) and having the computing device (49), wherein the external computing device (49) transmits the desired path segment to the vehicle control system.

8. The vehicle system (36) of claim 1, comprising a vehicle control system disposed in the vehicle (10) and having the computing device (49), wherein the vehicle control system is configured to derive the desired path segment.

9. The vehicle system (36) of claim 1, wherein the processor (50) is configured to generate the desired path and to apply the throttle command and the steer angle to drive the vehicle (10) without human intervention.

10. A method, comprising:
spatially locating a vehicle location via a spatial location system (38);
selecting a calibration mode via a processor (50); and
executing, via the processor (50), an automatic steering calibration based on the calibration mode to update one or more steering parameters, wherein executing the automatic steering calibration comprises driving the vehicle (10) via autoguidance to spatially follow a desired path segment.

11. The method of claim 10, wherein the one or more steering parameters comprise third order polynomial parameters.

12. The method of claim 10, comprising:
generating a curvature command based on the path segment;
generating a steer angle based on the curvature command;
measuring, via the processor (50) a measured yaw rate, a measured velocity, and a measured steer angle based on the vehicle (10) being driven by a human or being driven in an unmanned mode; and
updating, via the processor (50), the one or more steering parameters based on the measured yaw rate, the measured velocity, and the measured steer angle.

13. The method of claim 12, wherein updating the one or more steering parameters based on the measured yaw rate, the measured velocity, and the measured steer angle comprises:
estimating an estimated curvature by inverse mapping the measured steer angle;
estimating an estimated velocity;
estimating an estimated yaw rate; and
updating the one or more steering parameters based on comparing the estimated curvature, estimated velocity, and estimated yaw rate to the measured yaw rate, the measured velocity, and a desired curvature of the desired path segment.

14. The method of claim 10, comprising continuously updating the one or more steering parameters based on the measured yaw rate, the measured velocity, and the measured steer angle by executing, via the processor (50), a continuous update mode.

15. A non-transitory, computer readable medium comprising instructions that when executed by a processor (50) cause the processor (50) to perform a method according to any one of the claims 10-14.
